# DEMANDE DE BREVET EUROPEEN

(11) **EP 3 032 469 A1**
(43) Date de publication de la demande: **15.06.2016**
(21) Numéro de dépôt: 14307004.3
(22) Date de dépôt: 11.12.2014
(51) Int. Cl.: G06K 19/077

(54) **Procédé de fabrication d'un dispositif radiofréquence comprenant une antenne connectée à une plaque de condensateur filaire**

(71) Demandeur: GEMALTO SA, 92190 Meudon (FR)
(72) Inventeur: Mendez, Lucile, 13881 Gemenos Cedex (FR); Seban, Frédérick, 13881 Gemenos Cedex (FR); Buyukkalender, Arek, 13881 Gemenos Cedex (FR); Meridiano, Jean-Luc, 13881 Gemenos Cedex (FR)

(57) **Abrégé**

L'invention concerne un procédé de fabrication d'un dispositif radiofréquence (1) comprenant une antenne (2) reliée à un condensateur (3), ledit condensateur comprenant des première (3A) et seconde (3B) plaques conductrices en regard l'une de l'autre et séparées par un isolant (3N, 13) au moins une desdites première et seconde plaques (3A, 3B) étant formée par plusieurs portions P ou alternances de conducteur filaire ; Le procédé est caractérisé en ce qu'il comprend les étapes suivantes :
- formation sur le premier substrat (5A), de la première plaque conductrice (3A) de condensateur sur un premier substrat 5 prolongée d'au moins une portion d'antenne (2A) et d'une plage d'interconnexion (10C) ou d'une troisième plaque de condensateur (10A),
- formation sur le second substrat (5B), de la seconde plaque conductrice 3B prolongée d'une portion conductrice (2B) et d'une plage d'interconnexion (10D) par contact ohmique ou d'une quatrième plaque de condensateur (10B),
- agencement ou superposition du second substrat (5B) en regard du premier substrat (5A).

## Description

L'invention concerne un dispositif radiofréquence comprenant une antenne reliée à un condensateur comprenant des première et seconde plaques conductrices en regard l'une de l'autre, au moins une desdites première et seconde plaques étant formée par plusieurs portions de conducteur filaire. Il concerne également son procédé de fabrication.

Plus particulièrement, l'invention concerne des dispositifs tels que des supports à puce sans-contact, des cartes à puce sans contact, des étiquettes électroniques d'identification, des passeports électroniques, des dispositifs à antenne passive comportant un condensateur d'accord en fréquence. L'invention vise notamment des documents de voyage électroniques sans-contact (passeports électroniques et visas électroniques), les cartes bancaires ou tout autre produit sans-contact.

Ces dispositifs peuvent être conformes aux spécifications de l'ICAO (acronyme de l'expression anglo-saxonne "International Civil Aviation Organization") et/ou norme ISO/IEC 14443.

Les condensateurs visés par l'invention sont de préférence destinés à faire partie d'un circuit transpondeur comportant une antenne de couplage radiofréquence à laquelle ils sont connectés. Ces condensateurs comportent deux plaques dont au moins une plaque est formée de plusieurs portions de fils conducteurs électriquement. L'autre plaque peut être tout autre.

De tels circuits transpondeurs appartiennent notamment au domaine de la carte à puce sans-contact ou passeport électronique. L'antenne et le condensateur forment généralement un circuit résonant. Le circuit résonant peut être passif ou actif et être relié à une puce de circuit intégré radiofréquence pour communiquer des données avec un lecteur radiofréquence.

Le document EP2710522 décrit un dispositif radiofréquence comprenant une antenne reliée à un condensateur. Le condensateur est réalisé par des plaques comprenant des portions de fil conducteur.

Les structures des dispositifs qui y sont décrits ont pour l'instant un rendement de réalisation des plaques de condensateur relativement faible et donc couteux.
Il est nécessaire d'espacer les fils dans au moins un mode de réalisation pour améliorer le rendement. Cet espacement peut conduire à un encombrement des plaques de condensateur assez important. Cet encombrement important n'est pas souhaité dans certains produits notamment des cartes bancaires dont la surface est assez encombrée de zones que l'on ne peut embosser ou utiliser pour placer du fil conducteur.

L'invention vise à résoudre l'inconvénient précité.

En particulier, l'invention vise à améliorer la rapidité de réalisation des dispositifs radiofréquences ou transpondeurs radiofréquences.

L'invention propose un procédé simple d'exécution, facile à mettre en oeuvre dans l'immédiat et offrant différentes structures possibles.

L'invention permet de minimiser la surface nécessaire pour loger un dispositif radiofréquence comprenant un condensateur, pour une même valeur de capacité, tout en permettant une reproductibilité industrielle de sa valeur.

A cet effet, l'invention a pour objet un procédé de fabrication d'un dispositif radiofréquence comprenant une antenne reliée à un condensateur, ledit condensateur comprenant des première et seconde plaques conductrices en regard l'une de l'autre et séparées par un isolant au moins une desdites première et seconde plaques étant formée par plusieurs portions P ou alternances de conducteur filaire ; Le procédé se distingue en qu'il comprend les étapes suivantes :
- formation sur le premier substrat, de la première plaque conductrice de condensateur prolongée d'au moins une portion d'antenne 2A et d'une plage d'interconnexion ou d'une troisième plaque de condensateur,
- formation sur le second substrat, de la seconde plaque conductrice prolongée d'une plage d'interconnexion pour un contact ohmique ou d'une quatrième plaque de condensateur pour former un second condensateur.
- Ensuite, le procédé prévoit un agencement ou superposition du second substrat en regard du premier substrat.

Grâce à ces dispositions, l'invention permet de gagner en rapidité d'exécution ou souplesse de fabrication.

Des plaques de condensateur filaires réalisées sur deux feuilles permettent de réduire l'étendue ou encombrement de surface des plaques tout en conservant de la vitesse de dépôt de fil sur un substrat

Grâce au recours d'un contact ohmique entre deux circuits (ou plages d'interconnexion électrique) placées sur des feuilles distinctes superposées, l'invention selon un mode, permet d'avoir un seul condensateur au borne de l'antenne plutôt que deux condensateurs en série.

L'unicité du condensateur et le fait qu'il n'y a pas combinaison de condensateurs en série permet d'avoir beaucoup moins de surface occupée pour une même valeur de capacité.

Le procédé comprend d'autres étapes :
- Notamment de mise à nu ou de fourniture à l'état nu au moins de la première et seconde plages d'interconnexion par contact ohmique préalablement à l'assemblage des premier et second substrats.

L'invention a également pour objet le dispositif correspondant au procédé.

En particulier, le dispositif radiofréquence constitue ou comprend une antenne passive 2, l'antenne passive étant couplée ou destinée à être couplée avec un transpondeur radiofréquence.

Description des figures :
- La figure 1 illustre le dispositif conforme à un mode de mise en oeuvre du procédé de l'invention ;
- Les figure 2A, 2B, 2C illustrent différents réalisations de plaques de condensateurs filaires;
- La figure 2D et 2E illustrent différents motifs conducteurs susceptibles d'être réalisés sur un second substrat comportant une plaque de condensateur ou plage d'interconnexion par contact ohmique;
- La figure 2F illustre une coupe d'un fil conducteur 2 gainé d'isolant 3N;
- La figure 3 illustre une étape de mise en oeuvre du procédé de l'invention selon un mode dans lequel on réalise un premier motif conducteur par fil incrusté sur un premier substrat;
- La figure 4 illustre une seconde étape de mise en oeuvre du procédé de l'invention selon ce mode dans lequel on réalise un second motif conducteur par fil inscrusté sur un second substrat;
- La figure 5 illustre une étape d'assemblage des deux substrats des deux figures précédents ;
- Les figures 6A et 6B illustrent une variante de mise en oeuvre du procédé dans lequel le motif de circuit électrique 11 de la figure 4 est formé par des métallisations du module 15 et où le substrat 5B est le substrat d'un module du type carte à puce M lui-même ;
- Les figures 7A et 7B illustrent la fabrication d'une carte bancaire avec une antenne relais et un module avec antenne 15 selon un mode préféré de mise en oeuvre de l'invention.

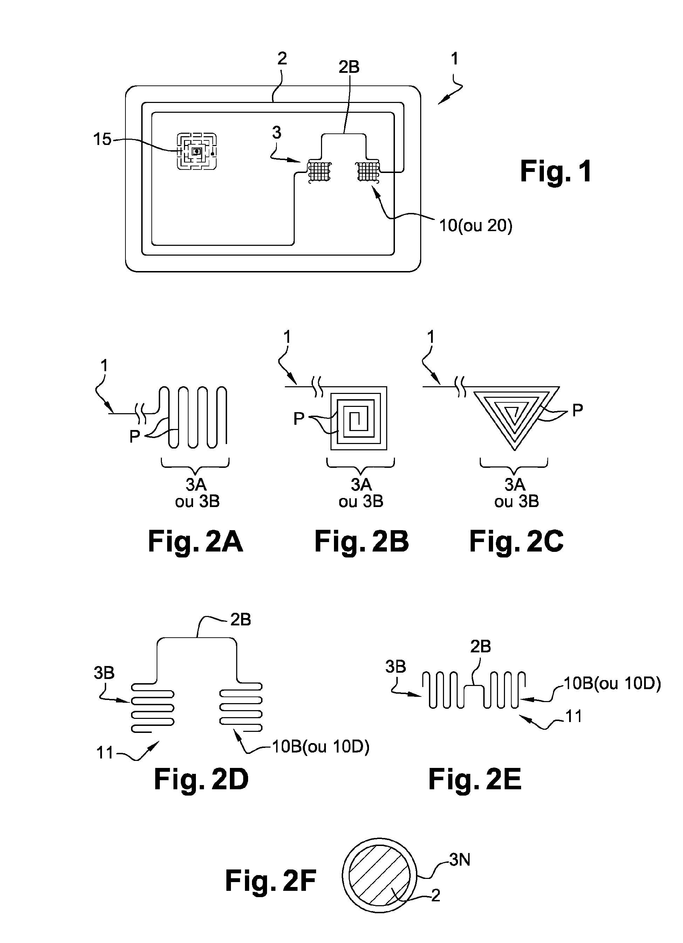

La figure 1 illustre un dispositif radiofréquence 1 obtenu par le procédé de fabrication conforme à un premier mode de réalisation de mise en oeuvre de l'invention.

Le dispositif 1 comprend une antenne 2 reliée à un au moins un condensateur 3 ; Le condensateur 3 comprenant des première 3A et seconde 3B plaques conductrices en regard l'une de l'autre et séparées par un isolant. L'isolant 3 peut être le gainage ou émaillage des fils conducteurs ou une matière isolante électriquement 13 placée entre les plaques de condensateur (13 non représenté).
Le dispositif comprend également un autre condensateur 10 formé de plaques de condensateur (10A, 10B) ou une interconnexion ohmique 20 formée de plages conductrices (10C, 10D) en contact électrique l'une avec l'autre.

Le dispositif 1 est ici une carte sans-contact ou hybride à contacts et sans-contact électriques conforme au standard ISO 7816 et/ou ISO/IEC 14443. Il est muni d'un module radiofréquence 15 qui peut être encarté / fixé dans ou sur le corps de carte formé par des feuilles comme détaillé par la suite. Le module 15 est couplé avec l'antenne passive formée par l'antenne 2 (avec inductance) et le condensateur 3.

Un tel module 15 peut comprendre une puce de circuit intégré radiofréquence reliée à une antenne de transpondeur réalisé sur une surface du module ou sur la puce de circuit intégré. Le module est de préférence sous forme de module carte à puce à interface duale, contacts (ISO 7816) et sans-contact ; Il est couplé à l'antenne passive A1 par couplage inductif électromagnétique.

Le dispositif peut toutefois constituer un insert (inlay) pour un passeport électronique ou autre objet sans contact comme une étiquette électronique, un badge, un ticket de transport, etc. Dans ce cas, d'autres feuilles de recouvrement peuvent venir le compléter de manière connue.

D'une manière générale, dans le cadre de la présente description, on entend par transpondeur tout circuit électronique radiofréquence communicant à l'aide d'un champ électromagnétique notamment de type HF ou UHF et comportant une antenne connectée à un condensateur et/ou à un circuit intégré.

Les transpondeurs sont utilisés dans différents domaines économiques tels que le bancaire (porte-monnaie électronique), la communication, le transport, l'identité (e-passeport, ID-carte). Dans l'identité notamment, il est connu d'effectuer l'identification d'une personne par communication radiofréquence avec un objet électronique portable sans contact de type RFID.

Le module peut comprendre ou non un substrat isolant pour supporter des plages de contact et/ou de l'antenne.

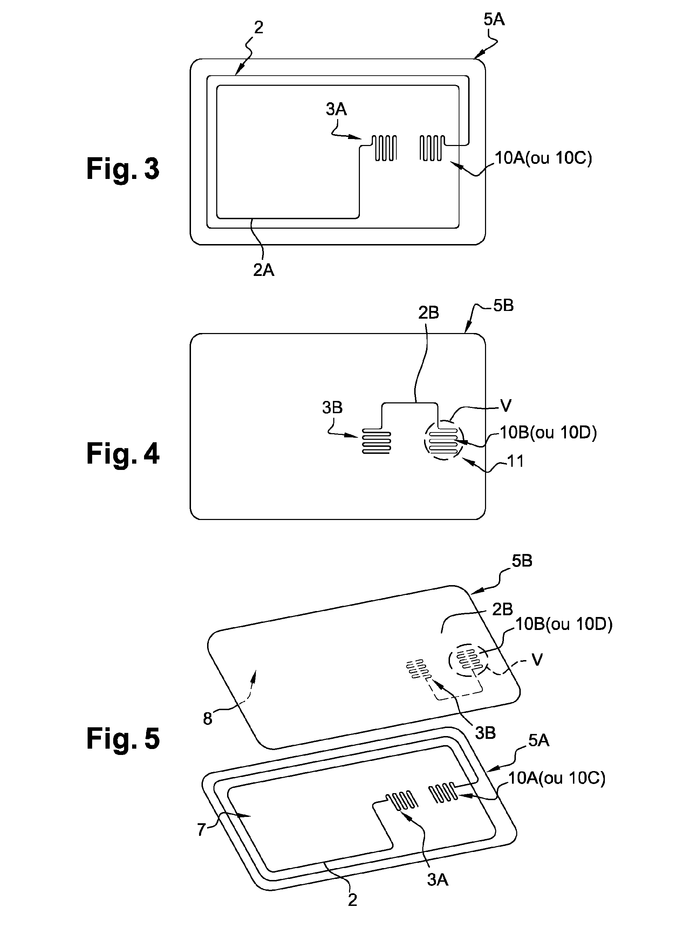

Sur les figures 4 et 5, au moins une des première et seconde plaques 3A, 3B de condensateur est formée par plusieurs portions P ou alternances de conducteur filaire comme cela est illustré aux figures 2A, 2B, 2C. Les plaques peuvent avoir des formes différentes, triangulaire, carrée, ou alternances simples (figure 2A).

Les alternances sont par exemple obtenues par un balayage du fil conducteur notamment en formant un zigzag sur une surface du substrat. L'espacement inter-portions de fil est par exemple de 200 à 400 µm pour des fils de diamètre de 50 à 100 µm environ, soit environ 2 à 5 fois le diamètre d'un fil.

Selon une caractéristique de ce premier mode de mise en oeuvre, le procédé comprend les étapes suivantes :
1) formation sur le premier substrat 5A, de la première plaque conductrice 3A de condensateur sur un premier substrat 5 prolongée d'au moins une portion d'antenne 2A et d'une plage d'interconnexion électrique (ohmique) 10C ou d'une troisième plaque de condensateur 10A,
2) formation sur le second substrat 5B, de la seconde plaque conductrice de condensateur 3B prolongée d'une portion conductrice 2B et d'une plage d'interconnexion 10D ou d'une quatrième plaque de condensateur 10B,
3) agencement ou superposition du second substrat 5B en regard du premier substrat 5A.

A la figure 3, dans l'exemple, on réalise (étape 1) des portions ou alternances 4N pour former une première plaque de condensateur 3A puis le fil d'antenne 2 de manière guidée sur le substrat 5A par incrustation de fil par ultrasons et plage d'interconnexion (ohmique) 10C ou une autre plaque de condensateur 10A.

Alternativement, on peut réaliser la fixation du fil conducteur par technique de broderie ou couture. Le substrat 5A peut être de toute nature notamment textile, ou plastique ou papier.

Alternativement, la plaque de condensateur 3A et plaque de condensateur 10A ou plage d'interconnexion électrique 10C peuvent comprendre ou constituer une plaque conductrice notamment de cuivre ou aluminium rapportée ou gravée. Le fil d'antenne peut être connecté par ultrasons à cette plaque 3A.

Le cas échéant, le fil peut être accroché au substrat et/ou par un adhésif apporté avec le fil ou apporté autrement de l'extérieur au fil. Un apport d'énergie thermique par soufflage ou par ultrasons permet de fixer le fil de plaque de condensateur sur le substrat et/ou le fil.

Inversement, le fil d'antenne peut être gravé et au moins une plage d'interconnexion électrique 10C ou plaque de condensateur 3A ou 10A réalisée en fil conducteur. Les fils de plaque ou plage peuvent être soudée par ultrasons ou autre sur les pistes d'antenne 2 en métal rapporté ou gravé. De préférence, on réalise l'ensemble 3A, 2, et 10A ou 10C en fil conducteur notamment incrusté et non gainé au moins au niveau de la plage d'interconnexion ohmique 10C ou de préférence sur tout le parcours pour des raisons de coût. Le cas échéant, il n'y a pas de croisement de fil au dessus des pistes d'antenne, la plage d'interconnexion ohmique 10C (ou plaque de condensateur 10A) et plaque de condensateur 3A demeurant de part et d'autre des pistes ou spires d'antenne 2.

Si croisement, on peut disposer d'un isolant sous la zone de croisement. On peut aussi utiliser un fil gainé d'isolant qui pourra le cas échéant être usiné au niveau de la plage d'interconnexion 10C si nécessaire selon une variante de mise en oeuvre.

Ensuite, à la figure 4 (étape 2), on procède de préférence comme à la figure 3 avec ses alternatives ou variantes possibles, sur le second substrat (de même nature de préférence que le substrat 5B), à la formation de la seconde plaque conductrice 3B de condensateur. La plaque de condensateur 3B est de préférence en fil incrusté et gainé d'isolant 3N.

Dans la foulée, la plaque 3B est prolongée d'une portion conductrice 2B (qui peut être ou non une portion de piste d'antenne ou qui peut être plus ou moins grande voire omise) ; Dans la foulée, on réalise une plage d'interconnexion 10D (mode préféré) ou d'une quatrième plaque 10B de condensateur reliée à cette portion de piste 2D ou reliée directement à la plaque 3B comme illustré à la figure 2E. Ces deux composants électriques 3B et 10B ou 10D reliés ensemble forment un motif conducteur 11 qui peut présenter plusieurs fonctions ci-après.
A) Le motif conducteur 11 peut comprendre une plaque de condensateur 3B et une plage d'interconnexion 10D pour se connecter à la plage d'interconnexion 10C du substrat 5A par contact ohmique (variante préférée) et former une interconnexion ohmique 20;
B) ou selon une variante secondaire, le motif 11 peut comprendre une plaque de condensateur 3B (pour former le condensateur 3 avec la plaque 3A du substrat 5A) et une autre plaque 10B de condensateur (pour former un autre condensateur 10 avec la plaque 10A) ;
C) il peut comprendre une portion conductrice 2B pour relier une plaque 3B à une plage 10D ou plaque 10B notamment pour enjamber les pistes d'antenne.

De préférence, le motif 11 est réalisé en fil conducteur gainé de verni ou émaillé puisqu'il présente un parcours plus réduit que le motif conducteur 2, 2A, réalisé sur le substrat 5A.

Selon une caractéristique, le procédé selon un mode comprend une étape de mise à nu ou de fourniture à l'état nu, de la première 10C et/ou seconde 10D plages d'interconnexion préalablement à l'assemblage des premier et second substrats ; Les portions de fils des plaques de condensateur 3A, 3B sont maintenues isolées électriquement l'une de l'autre de toute manière connue. La manière préférée étant de fournir le fil de motif 11 à l'état gainé d'isolant 3N, le fil d'antenne 2A et plaque 3A pouvant être nu ou également isolé ou gainé.

Dans l'exemple, tout le motif conducteur du substrat 5A et est fourni / réalisé déjà nu et on fournit de préférence la plage 10C isolée électriquement et on la dénude ensuite en surface par une étape d'usinage, abrasion de surface notamment fraisage, laser dans une zone V de mise à nu du fil autour de la plage 10C.

Alternativement, tous les motifs conducteurs des deux substrats sont isolés électriquement et on dénude en surface par usinage ou autre, les plages interconnexion 10C, 10D avant de les connecter par contact ohmique.

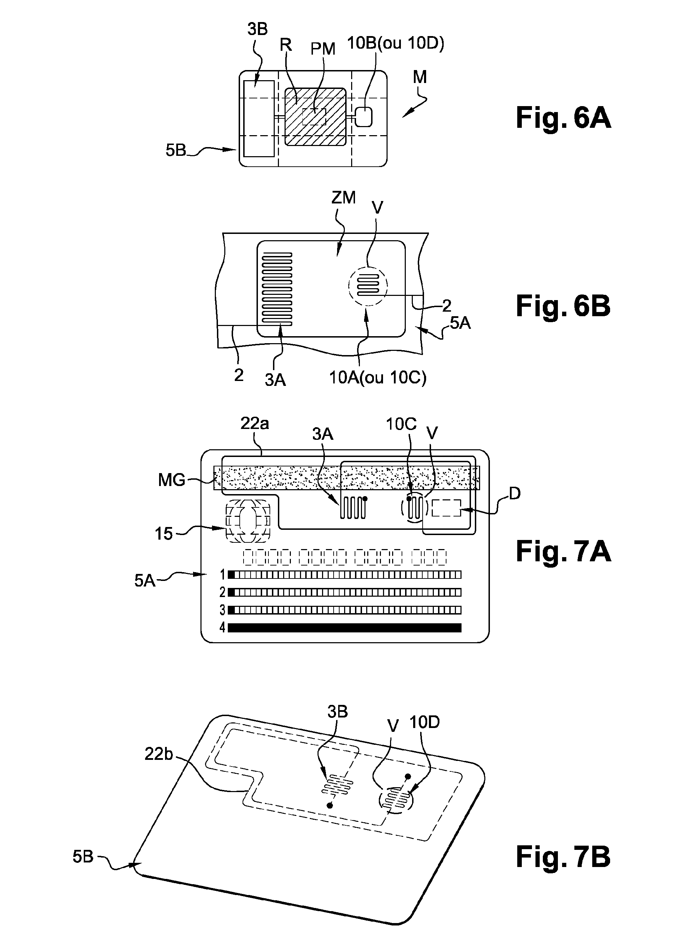

Aux figures 6A et 6B, est illustré une variante de mise en oeuvre du procédé, le motif 11 pouvant être formé par le module 15 ou M lui-même ; Des plages ou pistes similaire ou identique à 3B, 2B et 10B, 10D peuvent être réalisées sur le substrat de module 15 notamment par gravure.
Une puce du module PM peut être ou non reliée directement aux plages et/ou plaques d'interconnexion ohmique.
Dans ce cas, le substrat isolant 5B peut devenir le substrat du module.

Le dispositif peut donc comprendre un module M à puce de circuit intégré PM et en ce que le module comprend le second substrat 5B avec le second motif conducteur 11 comportant une seconde plaque de condensateur 3B et d'une plage d'interconnexion par contact ohmique 10D ou une quatrième plaque de condensateur 10B.

Le module M peut être un module à double-interface avec une puce de type à contacts et sans-contact. Il peut donc être un module du type double-face notamment gravé. Il peut être destiné à connecter une antenne dans le corps de carte sans le recours à une antenne relais. Ce module peut donc ne pas comporter d'antenne sur son substrat 5B.

Sur la face cachée du module, on peut avoir ici une première plage de contact ohmique 10D (ou plaque 10B de capacité) destinée à connecter ici une plage conductrice 10C de connexion ohmique d'une antenne (puisque la surface 10D est réduite comparativement à celle de la plaque 3A).

On peut avoir aussi une plaque de condensateur 13B dont la surface est beaucoup plus importante que celle de la première plage de contact ohmique 10D. Cette surface est par exemple 2 à 10 fois plus importante. Elle peut s'étendre sur tout un côté (ou plusieurs) ou toute une largeur d'un module M.

Au niveau du corps de carte, ce dernier peut avoir une plaque de condensateur 3A (notamment en fils) de l'antenne 2, destinée à être positionnée sous la plaque de condensateur 3B correspondante du module M dans la cavité de réception du module à l'emplacement ZM.

Le corps de carte 5A (ou du moins une feuille) a aussi selon ce mode de réalisation, une plage conductrice d'interconnexion ohmique 10C (qui peut être aussi une plaque de condensateur 10A avec des dimensions plus importante le cas échéant). La plage d'interconnexion électrique ohmique 10C notamment en fils, est destinée à être positionnée dans la cavité de module M à l'emplacement ZM du module M, sous la plage 10D d'interconnexion ohmique du module.

Cette constitution a notamment l'avantage de permettre une souplesse de fabrication des cartes radiofréquences selon le type de puce disponible qui peuvent exiger différentes valeur de capacité à l'extérieur de la puce électronique en fonction notamment de la valeur de leur capacité interne qui varie selon les fabricants.
En fonction des puces, il est possible d'avoir des valeurs de capacité 3 et/ou 10 modulables.

Les surfaces des plaques de condensateur sont optimisées dans un mode avec un seul condensateur 3 et une interconnexion ohmique 20 comme développé ultérieurement sur les figures 7A, 7B.

Le cas échéant aux figures 6A, 6B, la piste formant l'antenne 2 entre la plaque 3A et plage 10C peut être réduite à une portion de liaison entre 34 et 10C. Le module peut comprendre une antenne ou autre circuit électrique électronique relié aux éléments 3A et 10A (10C).

Les figures 7A et 7B illustrent la fabrication d'une carte bancaire selon un mode de mise en oeuvre préféré de l'invention.

Sur une feuille 5A notamment en plastique, figure les emplacements correspondant à une piste magnétique MG, un module comportant une antenne et destiné à coopérer avec une antenne passive 22a, 22b ou relais, un afficheur électronique (Dcvv) ou autre afficheur, des zones interdites à l'embossage (lignes 1,2,3,4) et une zone autorisée d'embossage au dessus, un emplacement éventuel d'un autre module sans-contact.

Sur cette feuille 5A, on réalise une partie d'un circuit antenne relais 22a dans un emplacement résiduel qui est de plus en plus étroit. On réalise d'abord une plaque de condensateur filaire 3A dont l'écartement inter pistes est ici réduit de manière optimisée (pas de croisement de fil directement par-dessus avec peu ou pas de matière inter pistes pour fixer /incruster le fil)

Ensuite, on réalise au moins une spire 22a qui se termine par d'autres alternances (ou va et vient) localisées de fil formant une première plage d'interconnexion électrique ohmique 10C.
Le gainage éventuel de fil est enlevé par laser dans une zone V d'interconnexion.

A la figure 7B, on réalise un complément de circuit d'antenne 22b sur une autre feuille distincte (ou substrat) notamment plastique. Le circuit est aussi en fil incrusté ; Il commence par une autre plaque de condensateur filaire 3A en fil incrusté et dont l'écartement inter pistes est également ici réduit de manière optimisée comme précédemment.

Ensuite, on réalise au moins une spire 22b qui se termine par d'autres alternances 10D (ou va et vient) localisées de fil formant une seconde plage d'interconnexion. Un gainage éventuel de fil est enlevé par laser dans une zone V d'interconnexion.

Les alternances de la plaque 3A sont destinées à être sensiblement perpendiculaires à celles de la plaque 3B après assemblage des feuilles 5A, 5B pour une meilleure reproductibilité industrielle de la valeur de capacité.

Ensuite, on procède à l'assemblage des feuilles par lamination pour former un insert ou inlay qui va recevoir ultérieurement d'autres feuilles de couverture. Le procédé prévoit de préférence de réaliser une pluralité de circuits 2éa, 22b sur de grandes feuilles assemblées par la suite et découpée en final pour extraire le format carte à puce.

Au cours de l'assemblage, les plages d'interconnexion 10C, 10D qui se font face en étant dénudées, peuvent se contacter électriquement ou (de manière ohmique) avec ou sans ajout de matière conductrice intermédiaire.

Grâce à l'invention, les plaques de condensateur ont une surface réduite optimisée en étant sur deux substrats distincts. Il y a besoin d'un seul condensateur réduisant ainsi la surface nécessaire par rapport au recours de deux condensateurs (comme dans une alternative où les plages 10C et 10D sont employées comme des plaques de condensateur selon un mode de l'invention). Le circuit électrique résultant correspond à un seul condensateur et une valeur de capacité plus importante par rapport à deux condensateurs en série dans l'alternative ci-dessus.

En outre, l'antenne est répartie sur deux niveaux minimisant son encombrement sur une seule feuille pour une même inductance. La zone à embosser est plus facilement préservée.

Le cas échéant, dans tous les exemples, si on retient une interconnexion ohmique 20 au lieu d'une capacité 10, les plages d'interconnexion correspondantes peuvent ne pas comprendre d'alternance et être réduite à une portion de fil conducteur éventuellement préparée, par exemple dénudée et recouverte avec de la matière conductrice électrique notamment isotropique ou anisotropique en film ou pâte ou en goutte.

De même, dans tous les exemples, en généralisant le principe de l'invention, les fils d'antenne 2 ou 22a, 22b peuvent être remplacés par une piste ou portion de piste de circuit électrique. Le dispositif de l'invention deviendrait un dispositif électrique comprenant une piste reliée à un condensateur comprenant des première et seconde plaques conductrices en regard l'une de l'autre, au moins une desdites première et seconde plaques étant formée par plusieurs portions de conducteur filaire.

## Revendications

1. Procédé de fabrication d'un dispositif radiofréquence (1) comprenant une antenne (2) reliée à un condensateur (3), ledit condensateur comprenant des première (3A) et seconde (3B) plaques conductrices en regard l'une de l'autre et séparées par un isolant (3N, 13) au moins une desdites première et seconde plaques (3A, 3B) étant formée par plusieurs portions P ou alternances de conducteur filaire, **caractérisé en ce qu'**il comprend les étapes suivantes :
- formation sur le premier substrat (5A), de la première plaque conductrice (3A) de condensateur prolongée d'au moins une portion d'antenne (2A) et d'une plage d'interconnexion 10C ou d'une troisième plaque (10A) de condensateur (10),
- formation sur le second substrat (5B), de la seconde plaque conductrice (3B) de condensateur prolongée d'une plage d'interconnexion (10D) pour un contact ohmique (20) ou d'une quatrième plaque de condensateur (10B) pour former un second condensateur (10),
- agencement ou superposition du second substrat (5B) en regard du premier substrat (5A).

2. Procédé selon la revendication précédente, **caractérisé en ce que** les portions ou alternances (4N) et le fil d'antenne (2) sont déposés de manière guidée sur un substrat.

3. Procédé selon l'une des revendications précédentes, **caractérisé en ce qu'**il comprend une étape de mise à nu ou de fourniture à l'état nu au moins de la première (10C) et/ou seconde (10D) plages d'interconnexion par contact ohmique préalablement à l'assemblage des premier et second substrats.

4. Dispositif radiofréquence (1) comprenant une antenne (2) reliée à un condensateur (3), ledit condensateur comprenant des première (3A) et seconde (3B) plaques conductrices en regard l'une de l'autre et séparées par un isolant (3N, 13) au moins une desdites première et seconde plaques (3A, 3B) étant formée par plusieurs portions de conducteur filaire P, **caractérisé en ce que** sur le premier substrat (5A) comprend la première plaque conductrice (3A) de condensateur qui se trouve prolongée d'au moins une portion d'antenne (2A) et d'une plage d'interconnexion par contact ohmique (10C) ou d'une troisième plaque (10A) de condensateur (10),
- le second substrat (5B) comprend la seconde plaque conductrice (3B) prolongée d'une portion conductrice 2B éventuelle et d'une plage d'interconnexion (10D) par contact ohmique ou d'une quatrième plaque de condensateur (10B),
- le second substrat (5B) étant agencé ou superposé en regard premier substrat (5A) de manière à former le condensateur (3) et l'interconnexion ohmique (20) ou condensateur (10).

5. Dispositif selon la revendication précédente, **caractérisé en ce que** lesdites portions P de conducteur filaire forment des alternances (3A) sensiblement parallèles entre elles ou des spirales.

6. Dispositif selon l'une quelconque des revendications 4 à 5, **caractérisé en ce que** les portions de fil (2, 3A, 3B) sont déposées par broderie ou incrustation sur un substrat.

7. Dispositif radiofréquence 1 selon l'une quelconque des revendications 4 à 6, **caractérisé en ce qu'**il constitue ou comprend une antenne passive (2), l'antenne passive étant couplée ou destinée à être couplée avec un transpondeur radiofréquence (15).

8. Dispositif radiofréquence 1 selon l'une quelconque des revendications 4 à 6, **caractérisé en ce qu'**il comprend un module (M) à puce de circuit intégré et **en ce que** le module comprend le second substrat (5B) avec le second motif conducteur (11) comportant une plaque de condensateur (3B) et d'une plage d'interconnexion (10D) par contact ohmique ou une plaque (10B) de condensateur.
